# EUROPEAN PATENT SPECIFICATION

(11) **EP 2 241 808 B1**
(45) Date of publication and mention of the grant of the patent: **17.02.2016**
(21) Application number: 10008127.2
(22) Date of filing: 29.11.2007
(51) Int. Cl.: F23L 7/00, F23R 3/28, F23R 3/00

(54) **Method of operation a gas turbine engine**
Betriebsverfahren eines Gasturbinenmotors
Procédé de fonctionnement d'un moteur à turbine à gaz

(43) Date of publication of application: 20.10.2010
(62) Divisional of application: 07862427.7
(73) Proprietor: United Technologies Corporation, Hartford, CT 06101 (US)
(72) Inventor: Veninger, Albert, Coventry, CT 06238 (US); Melman, Jeffrey, Simsbury, CT 06070 (US); Blanchard, Christine, East Haddam, CT 06423 (US); Schlein, Barry, Wethersfield, CT 06109-1211 (US)
(74) Representative: Taylor, Adam David

(56) References cited:
- US-A- 3 747 336
- US-A- 3 763 650
- US-A- 4 977 740
- US-A- 5 054 279
- US-A1- 2005 044 857

## Description

### BACKGROUND OF THE INVENTION

### (1) FIELD OF THE INVENTION

The present invention generally relates to a gas turbine' engine and more specifically to a combustion chamber of the engine with reduced emissions. A prior art combustor for a turbine engine and a combustion method having the features of the preamble of claim 1 are described in US 2005/0044857.

### (2) DESCRIPTION OF THE RELATED ART

Gas turbine engines operate according to a continuous-flow, Brayton cycle. A compressor section pressurizes an ambient air stream, fuel is added and the mixture is burned in a central combustor section. The combustion products expand through a turbine section where bladed rotors convert heat energy from the combustion products into mechanical energy for rotating one or more centrally mounted shafts. The shafts, in turn, drive the forward compressor section, thus continuing the cycle. Gas turbine engines are compact and powerful power plants, making them suitable for powering aircraft, heavy equipment, ships and electrical power generators. In power generating applications, the combustion products also drive a separate power turbine attached to an electrical generator.

Most power turbine applications provide base load power and peak power during high demand periods only. Other applications include a more continuous mode of operation such as a means to power natural gas pipeline pumping and powering military and commercial ships. Because most power turbine applications are land-based installations, the exhaust emissions typically require treatment to meet government, state and local clean air standards for unburned hydrocarbon (HC), oxides of nitrogen (NOx), carbon monoxide (CO) and smoke or airborn particulate. Most permanent installations include large stacks to redirect the exhaust stream upward while simultaneously providing treatment to lower emissions. Today, exhaust gases are treated with selective catalytic converters and other methods of exhaust clean up down stream of the engine. As the worldwide demand for electrical power continues to rise, air emissions standards are becoming ever more paramount and stringent.

During the combustion process, different types of emissions are created at various times and areas in the combustor. NOx typically forms at the forward region, in the hottest area of the combustor where the fuel and combustion air mixture ignites to form the combustion flame. The CO emissions form as the combustion reaction propagates axially rearward down the axial length of the combustion chamber. More complete combustion reduces the CO emissions produced as the CO is converted to CO₂ by hotter combustion and/or longer residence time.

One method of NOx reduction involves the injection of moisture such as water (H₂O) or steam into land-based turbines. The H₂O or steam may be injected at locations from the engine inlet to the combustor. Typical combustor locations include the fuel nozzle or injector and various locations along the combustor wall. The moisture quenches the combustion flame temperature and significantly reduces the formation of NOx.

Another method of reducing NOx formation in land-based or aero turbines is known as 'Dry Low NOx' (DLN) or 'Dry Low Emissions' (DLE) combustion. With DLN/DLE combustion, a lean combustion mixture produces a lower combustion flame temperature. Yet another method of reducing NOx formation in land-based or aero turbines is to inject additional compressor air transversely into the combustion flame to quench the combustion flame temperature, thus reducing the formation of NOx. However, by reducing the combustion flame temperature using any of these methods, the level of CO emissions may actually increase due to the lower flame temperatures.

During engine operation, combustion chambers contain flame temperatures in excess of about 3000 degrees Fahrenheit (1649 degrees Celsius). In order to operate for the number of years necessary to be economically viable, metal combustion chamber wall temperatures must not exceed about 1700 degrees Fahrenheit (927 degrees Celsius). Routinely subjecting a combustion chamber to temperatures above about 1700 degrees Fahrenheit (927 degrees Celsius) will eventually weaken the material, leading to oxidation, loss of material and part replacement.

What is presently needed is a combustion chamber for reducing both NOx and CO emissions, without negatively affecting component durability or the operational efficiencies of the other gas turbine engine sections.

### BRIEF SUMMARY OF THE INVENTION

The present invention provides a method of combusting fuel with reduced emissions in a turbine engine, the engine having a combustion chamber defined by a liner wall, said liner wall having an inwardly facing hot side and an outwardly facing cold side, the combustion chamber further comprising a shroud circumscribing a portion of the liner wall, the shroud spaced from the cold side of the liner wall so as to define an annulus therebetween, the method comprising the steps of: a. introducing a fuel inside of said liner wall without premixing in a pressurized air stream prior to ignition; b. producing a flowing stream of combustion products by igniting the fuel and air, and flowing said combustion products adjacent said hot side in a downstream direction; c. introducing no additional pressurized air inside and adjacent said liner wall for film cooling said liner wall, for reducing CO; d. flowing moisture adjacent said hot side and in the downstream direction for reducing NOx; and e. flowing air adjacent said cold side within said annulus in at least partially the downstream direction for reducing CO; characterised by the steps of f. preventing the air adjacent said cold side within said annulus from contacting said hot side; and g. introducing air into a lean combustion zone of the combustion chamber transversely through apertures near an aft end of the shroud and aligned boss bores in the liner.

Described herein are gas turbine engines 10, combustion chambers 46 and methods of operation for reducing NOx and CO emissions in aerospace and industrial applications. An upstream compressor 18 provides pressurized air 32 to a combustion chamber having an inner liner 58 and an outer shroud 62 circumscribing a portion of the inner liner 58. The inner liner 58 having a wall 74 with an inwardly facing hot side 76 and an outwardly facing cold side 78. The shroud 62 is spaced from the inner liner 58, forming an annulus 100 for accepting a pressurized air stream 32B therein. Heat transfer features 82, disposed on the cold side 78, exchange heat from the liner wall 74 to the air stream 32B.

methods of operation include introducing fuel and air inside a liner wall 74 without premixing, and producing combustion products without introducing any additional pressurized air adjacent the hot side 76.

These and other objects, features and advantages of the present invention will become apparent in view of the following detailed description and accompanying figures illustrating various embodiments, where corresponding identifiers represent like features between the various figures.

### BRIEF DESCRIPTION OF THE SEVERAL VIEWS OF THE DRAWINGS

Figure 1 is a segmented cross section of a land-based gas turbine engine;
Figure 2 is a cross section of a combustor of the gas turbine engine of Figure 1 according to an embodiment of the present invention, with the lower half details removed for clarity;
Figure 3 is a perspective view of a combustion chamber of the combustor of Figure 2;
Figure 4 is a cross section of an aft liner to shroud seal of the combustion chamber of Figure 3 taken along line 4-4;
Figure 5 is a cross section of the a forward liner to shroud seal of the combustion chamber of Figure 3 taken along line 5-5;
Figure 6 is a cross section of a liner boss of the combustion chamber of Figure 3 taken along line 6-6;
Figure 7 is a perspective view of the combustion chamber of Figure 3 with the outer shroud partially removed to illustrate internal features;
Figure 8 is a perspective cross section of a tab of the combustion chamber of Figure 7 taken along line 8-8; and
Figure 9 is a chart comparing the CO and NOx characteristics of a conventional, baseline combustion chamber with those of the present, low emissions combustion chamber.

### DETAILED DESCRIPTION OF THE INVENTION

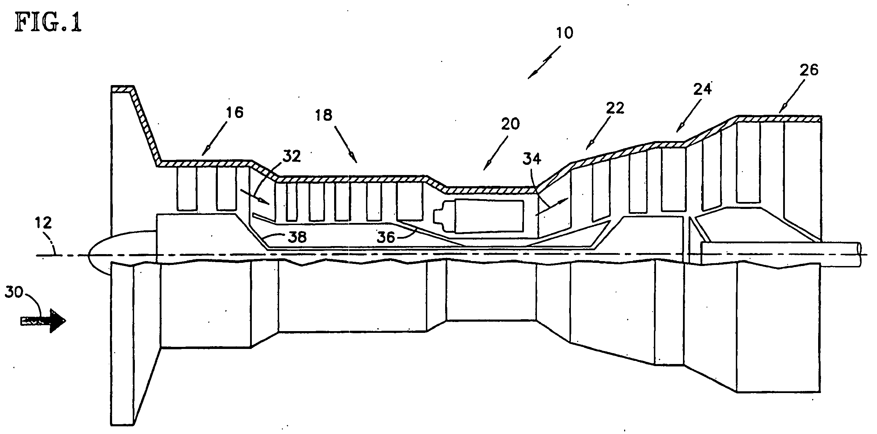

An exemplary industrial gas turbine engine 10 is circumferentially disposed about a central, longitudinal axis or axial centerline 12 as illustrated in Figure 1. The engine 10 includes in series order from front to rear, low and high pressure compressor sections 16 and 18, a central combustor section 20 and high and low pressure turbine sections 22 and 24. In some examples, a free turbine section 26 is disposed aft of the low pressure turbine 24. This application also extends to aero engine with a fan or gear driven fan, and engines with more or fewer sections than illustrated.

As is well known in the art of gas turbines, incoming ambient air 30 becomes pressurized air 32 in the compressors 16 and 1ε. Fuel mixes with the pressurized air 32 in the combustor section 20, where it is burned. Once burned, combustion products 34 expand through turbine sections 22, 24 and power turbine 26. Turbine sections 22 and 24 drive high and low rotor shafts 36 and 38 respectively, which rotate in response to the combustion products and thus the attached compressor sections 18, 16. Free turbine section 26 may, for example, drive an electrical generator, pump, or gearbox (not shown).

It is understood that Figure 1 provides a basic understanding and overview of the various sections and the basic operation of an industrial gas turbine engine. It will become apparent to those skilled in the art that the present application is applicable to all types of gas turbine engines, including those with aerospace applications.

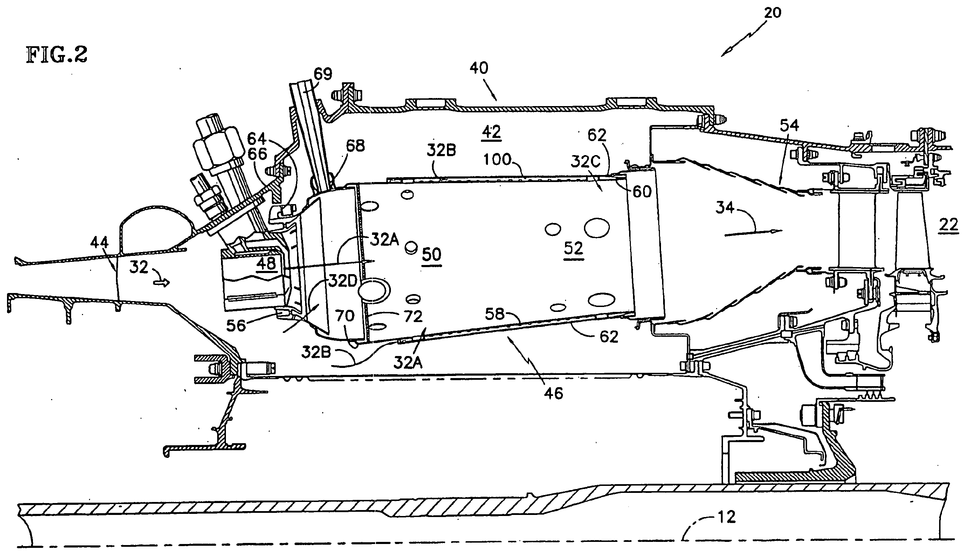

Referring now to the combustor module 20 of Figure 2, a combustor case 40 forms an annular pressurized air passage 42, which receives a portion of the pressurized air 32 via a diffuser 44. Distributed circumferentially about the centerline 12 is an array of approximately cylindrical combustion chambers 46, also known as combustor cans. A fuel nozzle 48 delivers natural gas, diesel, home heating oil, aviation fuel, bio fuels or other fuels to each chamber 46. Water or steam may also be introduced through the fuel nozzle 48, or other locations upstream of, or within the combustion chambers 46. The fuel burns within each chamber 46 in rich and lean combustion zones 50, 52. The combustion products 34 then exit the chamber 46 through a louvered transition duct 54 to the high pressure turbine module 22.

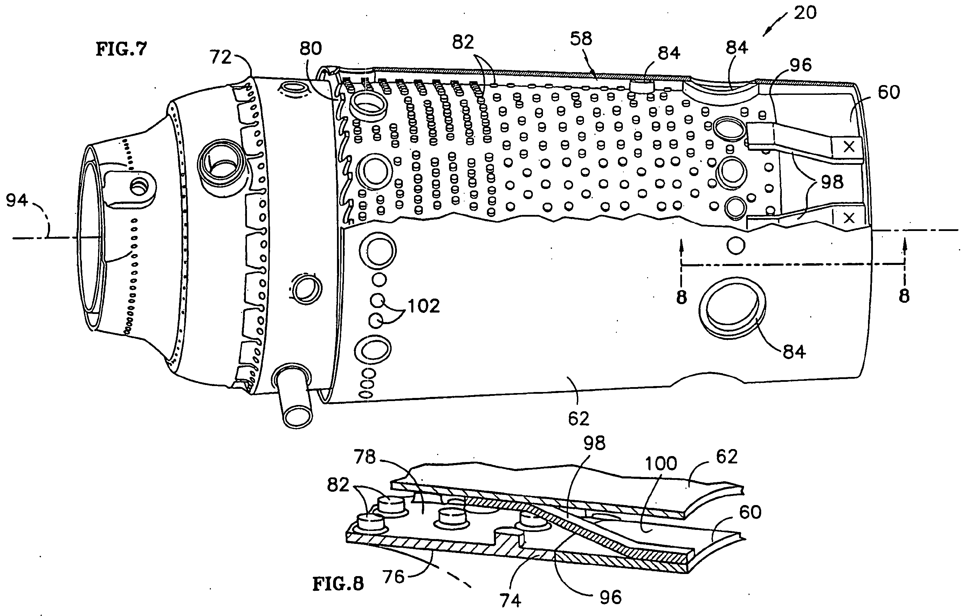

Each combustion chamber 46 broadly comprises a forward scoop 56, an inner liner 58, an aft ring 60 and an outer shroud 62. In one example, a front attachment 64 is affixed to the scoop 56 and secures each combustion chamber 46 to a diffuser case 66. The aft ring 60 fits within the transition duct 54 and secures the combustion chamber 46 at the rear. At least one of the chambers 46 may include an igniter retaining provision 68, which retains an igniter 69 for initiating a flame during start up. Transfer tubes (Figure 7) may join adjacent chambers 46, allowing the combustion flame to propagate between chambers.

One or more stepped louvers 70 are arranged between the scoop 56 and the inner liner 58. The scoop 56 is formed of a high strength material. Preferably, the rearmost louver 70 has a shape that closely resembles the inner liner 58 to which it is joined.

The rear louver 70 is joined to the inner liner 58 at a butt-type, forward joint 72. Although resistance welding, flash butt welding, laser welding, brazing or other methods may be used, the forward joint 72 is preferably created via a fusion welding process. The fusion welded joint 72 can be formed manually or robotically. By using a fusion weld process to form the joint 72, nondestructive inspection techniques such as x-ray, fluorescent penetrant, ultrasonic or similar techniques are used to ensure joint 72 integrity. In other examples, the rear louver 70 is integrally formed with the inner liner 58 and joined to an upstream louver 70 using a lap style joint (not illustrated). A lap style joint requires samples to be removed destructively and inspected microscopically to ensure joint integrity. The lap joint inspection process adds an additional overhead cost to each of the combustion chambers 46.

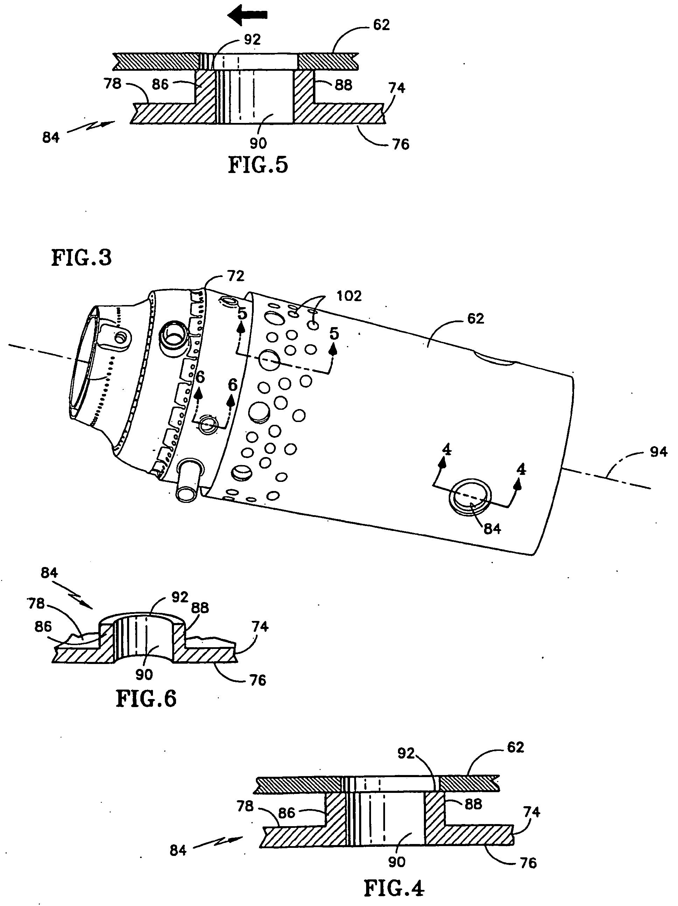

Referring now to Figures 3-7, the shape of the inner liner 58 is substantially cylindrical. An inner liner wall 74 has a radial thickness and is defined by an internal, hot side 76 (facing the rich and lean combustion zones 50, 52) and an oppositely faced, external, cold side 78. The surface of the hot side 76 is relatively featureless, and the surface of the external cold side78 has a scalloped flange 80, heat transfer features 82 and bosses 84. The scalloped flange 80 is located proximate the forward joint 72, and extends radially outwardly from the cold side 78. The flange 80 comprises a plurality of circumferentially spaced scallops around the outer radial sedge for introducing air.

A plurality of heat transfer features 82 create an interrupted topology on the surface of the cold side 78. The features 82 preferably extend radially outwardly from the cold side 78; however, other heat transfer features such as voids or dimples in the cold side 78 and axial fins are also contemplated. For example, a plurality of pedestals and/or dimples of various shapes and sizes may be arranged about the cold side 78. While feature 82 shapes such as spherical, square or other shapes may be also used, only cylindrical shaped pedestals of varying spacing are shown for brevity.. The features 82 are sized and arranged to tailor the transfer of heat from the liner wall 74 to the cooling air 32B in the annulus 100 between the liner hot side 76 and shroud 62. The features 82 may be oriented in patterns such as axial rows or circumferential rows or can be non-linear or the patterns may be completely variable. In one example, the pattern orientation varies in the axial direction.

The rich combustion zone 50 typically operates at a higher temperature than the lean zone 52, so the heat transfer features 82 are sized and arranged to remove a greater amount of localized heat. In the rich and lean zones 50, 52, the pattern is tailored to remove an appropriate amount of heat. As shown in the example, the features 82 vary in size and spacing in order to tailor the heat transfer capability. By tailoring the size and pattern of the heat transfer features 82, a varying amount of heat is removed from the liner wall 74 depending upon axial and circumferential location. Localized hot spots may require more heat transfer features 82 than cooler areas. The result of a varying pattern of features 82 is a substantially constant temperature profile about the inner liner wall 74.

As best illustrated in Figures 4-6, bosses 84 are spaced about the inner liner 58 at various axial and circumferential locations. In one example, a boss 84 is cylindrical shaped and includes a boss wall 86, bounded by a boss outer surface 88 and a boss bore 90. Each boss 84 extends radially outwardly from the cold side 78 with the bore 90 penetrating through the boss 84 and the inner liner wall 74. The boss wall 86 contains a radially outer sealing surface 92 that may be flat or arcuate. Preferably, the shape of the sealing surface 92 is defined by a radius extending from a longitudinal, combustion chamber axis 94 to match the shape of the outer shroud 62. The shape of the sealing surface 92 may or may not be constant in the axial direction. Further details of the sealing surfaces 92 and their function are discussed later.

The inner liner 58 is preferably formed from a high strength, high temperature capability material using an investment casting process. For example, die casting, sand casting, spin casting, chemical milling, conventional milling or other methods can also be used to form the liner. Although the scalloped flange 80, heat transfer features 82 and bosses 84 may be formed separately and affixed to the inner liner via brazing, welding or machining for example, they are-preferably formed with the inner liner 74 during manufacture.

An aft ring 60 can be affixed to the inner liner 58 at an aft joint 96. The aft joint 96 is preferably a butt type joint and is similar in construction to the forward joint 72 discussed earlier. The aft ring 60 is formed of a high strength sheet material by spinning, press forming, joining or other suitable methods.

Referring to the embodiment of Figure 8, a plurality of spaced tabs 98 extend radially outwardly from the ring 60 proximate the aft joint 96. A first end of the tabs 98 is affixed to the aft ring 60 and a second end is affixed to the shroud 62 by resistance welding or similar joining methods. The tabs 98 effectively space the shroud 62 from the inner liner 58 and affix the shroud 62 to the aft ring 60 at the aft end of the combustion chamber 46. In other embodiments, the shroud 62 is affixed to the inner liner 74 at a forward or central location.

The shroud 62 is approximately cylindrical shaped and circumscribes a portion of the inner liner 58, defining an annulus 100 therebetween. The shroud 62 is formed of a high temperature capability material. A number of apertures 102 penetrate the shroud 62 and are spaced about the shroud 62 as illustrated in Figure 4. Some apertures 102 align with and correspond to the boss bores 90 while others do not. The function of the apertures 102 is determined by location. Apertures 102 corresponding to the boss bores 90 and disposed near the forward end of the shroud 62 introduce a portion of compressor air 32A to the rich combustion zone 50. Apertures 102 corresponding to the boss bores 90 and disposed near the aft end of the shroud 62 introduce compressor air 32C into the lean combustion zone 52. Apertures 102 that do not align with or correspond to the boss bores 90 introduce compressor air 32B into the annulus 100.

Since the shroud 62 is affixed to the aft ring 60 via the plurality of tabs 98, it is constrained from rearward axial movement. There is slight relative axial growth between the shroud 62 and the inner liner 58 due to thermal expansion differences, so the shroud 62 is not constrained proximate the forward joint 72. As the shroud 62 expands axially forward, it slides along the scalloped flange 80 and the sealing surface 92 of corresponding bosses 84.

As described earlier, a number of the shroud apertures 102 communicate with the boss bores 90 in the inner liner 58. The shroud apertures 102 that communicate with the boss bores 90 are slightly larger than the boss bores 90 while also being slightly smaller than the boss outer surfaces 88. This overlap allows the boss sealing surface 92 to seat against the shroud 62, forming a substantial seal between the inner liner 58 and the shroud 62. Note that it is preferable for the ratio of shroud aperture 102 diameter to boss bore 90 diameter to increase the farther the boss 84 is away from the aft ring 60. This accommodates the greater axial displacement of the shroud 62 proximate the forward joint 72. The size and location of the shroud apertures 102 and boss bores 90 and boss outer walls 88 are defined such that during engine operation the edges of the shroud apertures 102 do not block the boss bores 90 and also do not allow a leakage path to form between the shroud aperture 102 edges and the boss outer walls 88.

The radial height of each boss 84 provides a minimal clearance between the sealing surface 92 and the outer shroud 62 for enabling cold assembly in an engine. At operating temperatures, the sealing surface 92 moves outward radially and seats against the outer shroud 62 to form a substantial seal. The radial growth is determined to provide a substantial seal at operating temperatures and relative axial movement between the inner liner 58 and the outer shroud 62 at lower temperatures.

A diffusion combustor system is defined broadly as a system where gaseous or liquid fuel is introduced into the combustion chamber without premixing in the pressurized air (also known as oxidizer air stream) prior to combustion. No additional pressurized air enters the chamber to film cool the hot side 76 of the inner liner wall 74. Moisture in the form of water or steam may also be introduced upstream of the combustor 20, through the fuel nozzle 48, or along the liner wall 74.

Referring back to Figure 2, a method of operation of the gas turbine engine and low emissions combustor 20 is described in greater detail. A fuel nozzle 48 injects fuel, in the form of a liquid or a gas and in some examples fuel and moisture, into the combustion chamber 46. An igniter 69 initially lights the mixture in rich combustion zone 50 and, once lit, the flame propagates between adjacent combustion chambers 46 via cross over tubes (not shown).

The low emissions combustor 20 uses the pressurized compressor air 32 exiting the diffuser 44 for various purposes. A combustion portion of the air 32A enters the rich combustion zone 50 axially through the fuel nozzle 48, scoop 56, and transversely through a forward array of boss bores 90 radially spanning the annulus 100 between the wall 74 and outer shroud 62. A cooling portion of the air 32B enters the annulus 100 through the scallops in flange 80 (Figure 8) and through apertures 102. The cooling portion of the air 32B forms a blanket about the inner liner wall 74, eventually exiting the annulus 100 between the aft tabs 98 (Figure 8). Again, note that the cooling portion of the air 32B remains in the annulus 100 and does not enter the rich or lean combustion zones 50, 52. A diffusion portion of the air 32C enters the lean combustion zone 52 transversely though an aft array of boss bores 90. The diffusion portion 32C conditions the radial profile and circumferential pattern of the combustion products for entry into the turbine 22. A film portion of the air 32D enters upstream of the inner liner 74 and shields the forward louvers 70 from the extreme temperatures proximate the fuel nozzle 48 exit.

The cooling portion of air 32B interacts with the heat transfer features 82 to absorb heat from the liner wall 74. Note that the apertures 102 directing the cooling portion of air 32B into the annulus 100 do not communicate with bosses 84, ensuring the cooling air portion 32B remains external of the rich and lean combustion zones 50, 52. Once in the annulus 100, the cooling air 32B forms a blanket about the liner 58, interacting with the heat transfer features 82. As was noted earlier, the size, shape and pattern of the heat transfer features 82 are tailored to maintain a substantially uniform liner wall 74 temperature.

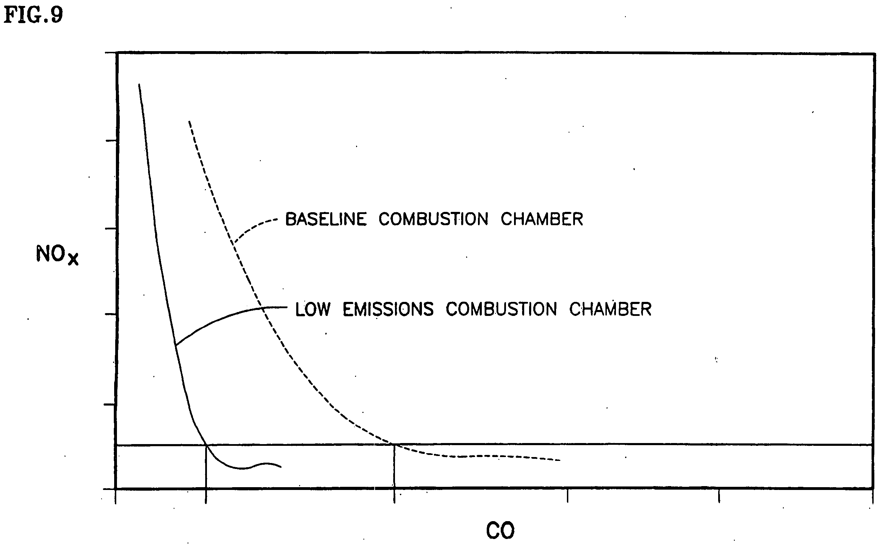

In conventional, film-cooled combustors, the cooling film adjacent to the hot side 76 of the inner liner wall 74 produces significant amounts of CO. With the combustion chamber 46 of the present invention, more complete combustion results from the absence of a cooling film along the hot side 76. More complete combustion enhances the conversion of CO to CO2 without any increase in NOx emissions. Figure 9 illustrates the dramatic reduction in CO production at any given NOx level of a low emissions combustion chamber when compared to a traditional, film-cooled chamber.

Other alternatives, modifications and variations will become apparent to those skilled in the art having read the foregoing description. The methods are applicable to all diffusion combustor systems, which combust liquid or gaseous fuels that are not premixed with oxidizer air prior to combustion, and inject water or steam without introducing additional air to film cool the combustor. The terms front, forward, fore, rear, rearward and aft relate to standard gas turbine engine nomenclature with the compressor sections being in the front. Accordingly, the invention embraces those alternatives, modifications and variations as fall within the broad scope of the appended claims.

## Claims

1. A method of combusting fuel with reduced emissions in a turbine engine (10), the engine having a combustion chamber (46) defined by a liner wall (74), said liner wall having an inwardly facing hot side (76) and an outwardly facing cold side (78), the combustion chamber further comprising a shroud (62) circumscribing a portion of the liner wall, the shroud spaced from the cold side of the liner wall so as to define an annulus (100) therebetween, the method comprising the steps of:
a. introducing a fuel inside of said liner wall without premixing in a pressurized air stream prior to ignition;
b. producing a flowing stream of combustion products by igniting the fuel and air, and flowing said combustion products adjacent said hot side in a downstream direction;
c. introducing no additional pressurized air inside and adjacent said liner wall for film cooling said liner wall, for reducing CO;
d. preventing the air adjacent said cold side within said annulus from contacting said hot side; and
e. flowing air adjacent said cold side within said annulus in at least partially the downstream direction for reducing CO; **characterised by** the steps of
f. flowing moisture adjacent said hot side and in the downstream direction for reducing NOx; and
g. introducing air into a lean combustion zone (52) of the combustion chamber transversely through apertures (102) near an aft end of the shroud and aligned boss bores (90) in the liner.

2. The method as set forth in claim 1 wherein the air flowing adjacent said cold side (78) is constrained radially by said shroud (62), forming a blanket.

3. The method as set forth in claim 1 or 2 wherein the moisture is introduced upstream of said liner wall (74).

4. The method as set forth in claim 1 or 2 wherein the moisture is introduced along said liner wall (74).

## Patentansprüche

1. Verfahren zum Verbrennen von Brennstoff mit vermindertem Schadstoffausstoß in einem Turbinenmotor (10), wobei der Motor eine Brennkammer (46) aufweist, die durch eine Flammrohrwand (74) definiert ist, wobei die Flammrohrwand eine nach innen weisende heiße Seite (76) und eine nach außen weisende kalte Seite (78) aufweist, wobei die Brennkammer ferner einen Mantelring (62) umfasst, der einen Abschnitt der Flammrohrwand abgrenzt, wobei der Mantelring von der kalten Seite der Flammrohrwand beabstandet ist, um einen dazwischen liegenden Ring (100) zu definieren, wobei das Verfahren die folgenden Schritte aufweist:
a. Einbringen eines Brennstoffs innerhalb der Flammrohrwand ohne Vormischen in einem Druckluftstrom vor der Zündung;
b. Erzeugen eines fließenden Stroms von Verbrennungsprodukten durch Zünden des Brennstoffs und Luft, und Strömen der Verbrennungsprodukte neben der heißen Seite in Stromabwärtsrichtung;
c. kein Einbringen zusätzlicher Druckluft ins Innere und neben die Flammrohrwand zur Filmkühlung der Flammrohrwand, um CO zu verringern;
d. Verhindern, dass die Luft neben der kalten Seite innerhalb des Rings in Kontakt mit der heißen Seite gerät; und
e. Strömen von Luft neben der kalten Seite innerhalb des Rings mindestens teilweise in Stromabwärtsrichtung, um CO zu verringern; **gekennzeichnet durch** folgende Schritte:
f. Strömen von Feuchtigkeit neben der heißen Seite und in Stromwabwärtsrichtung, um NOx zu verringern; und
g. Einbringen von Luft in eine Magerverbrennungszone (52) der Brennkammer quer **durch** Öffnungen (102) nahe einem hinteren Ende des Mantelrings und ausgerichtete Nabenbohrungen (90) in der Flammrohrwand.

2. Verfahren nach Anspruch 1, wobei die Luft, die neben der kalten Seite (78) strömt, radial durch den Mantelring (62) eingeschränkt ist und eine Decke bildet.

3. Verfahren nach Anspruch 1 oder 2, wobei die Feuchtigkeit oberhalb der Flammrohrwand (74) eingeleitet wird.

4. Verfahren nach Anspruch 1 oder 2, wobei die Feuchtigkeit entlang der Flammrohrwand (74) eingeleitet wird.

## Revendications

1. Procédé de combustion d'un combustible avec réduction des émissions dans un moteur à turbine à gaz (10), le moteur ayant une chambre de combustion (46) délimitée par une paroi de chemise (74), ladite paroi de chemise ayant une face chaude orientée vers l'intérieur (76) et une face froide orientée vers l'extérieur (78), la chambre de combustion comprenant en outre un carénage (62) entourant une partie de la paroi de chemise, le carénage étant séparé de la face froide de la paroi de chemise de manière à définir un espace annulaire (100) entre les deux, le procédé comprenant les étapes qui consistent à :
a. introduire un combustible à l'intérieur de ladite paroi de chemise sans mélange préalable dans un flux d'air pressurisé avant inflammation ;
b. produire un courant d'écoulement de produits de combustion par inflammation du combustible et de l'air, et faire circuler lesdits produits de combustion de manière adjacente à ladite face chaude vers l'aval ;
c. ne pas introduire d'air pressurisé supplémentaire à l'intérieur de ladite paroi de chemise et de manière adjacente à celle-ci pour le refroidissement pelliculaire de ladite paroi de chemise, afin de réduire le CO ;
d. empêcher l'air adjacent à ladite face froide à l'intérieur dudit espace annulaire d'entrer en contact avec ladite face chaude ; et
e. faire circuler l'air adjacent à ladite face froide à l'intérieur dudit espace annulaire au moins en partie vers l'aval afin de réduire le CO ; **caractérisé en ce qu'**il comprend les étapes qui consistent à :
f. faire circuler de l'humidité de façon adjacente à ladite face chaude et vers l'aval afin de réduire les NOx ; et
g. introduire de l'air dans une zone de combustion pauvre (52) de la chambre de combustion de manière perpendiculaire par des ouvertures (102) situées près de l'extrémité arrière du carénage et des alésages de bossage alignés (90) situés dans la chemise.

2. Procédé selon la revendication 1, dans lequel l'air circulant de façon adjacente à ladite face froide (78) est contraint radialement par ledit carénage (62), formant une couverture.

3. Procédé selon les revendications 1 ou 2, dans lequel de l'humidité est introduite en amont de ladite paroi de chemise (74).

4. Procédé selon les revendications 1 ou 2, dans lequel de l'humidité est introduite le long de ladite paroi de chemise (74).
